# EUROPEAN PATENT SPECIFICATION

(11) **EP 1 887 463 B1**
(45) Date of publication and mention of the grant of the patent: **18.11.2009**
(21) Application number: 06118194.7
(22) Date of filing: 31.07.2006
(51) Int. Cl.: G06F 9/445, H04M 1/72

(54) **Method and apparatus for configuring unique profile settings for multiple services**
Verfahren und Vorrichtung zum Konfigurieren einzelner Profileinstellungen für mehrere Dienste
Procédé et appareil de configuration des paramètres de profil unique pour services multiples

(43) Date of publication of application: 13.02.2008
(73) Proprietor: Research In Motion Limited, Waterloo, Ontario N2L 3W8 (CA)
(72) Inventor: May, Darrell Reginald, Waterloo Ontario N2V 2K6 (CA); Bocking, Andrew Douglas, Waterloo Ontario N2K 3Y8 (CA)
(74) Representative: MERH-IP Matias Erny Reichl Hoffmann

(56) References cited:
- WO-A2-97/47120
- US-A1- 2005 079 863
- US-A1- 2005 080 862
- DROGEHORN, O.; WUST, B.; DAVID, K: "Personalised applications and services for a mobile user" AUTONOMOUS DECENTRALIZED SYSTEMS, 2005. ISADS 2005. PROCEEDINGS, [Online] 4 April 2005 (2005-04-04), pages 473-479, XP002419282 Retrieved from the Internet: URL:http://ieeexplore.ieee.org/iel5/9846/3 1027/01452113.pdf?tp=&arnumber=1452113&isn umber=31027> [retrieved on 2007-02-09]

## Description

The present application relates generally to electronic devices and more particularly to a method and apparatus for configuring unique profile settings for multiple services in connection with which an electronic device is provisioned.

Electronic devices such as wireless personal digital assistants (PDAs), smart telephones and laptop computers with wireless capabilities are well known for providing users with services such as e-mail, Web browsing, text messaging, etc. Such devices communicate over a wide variety of networks including data-only networks such as Mobitex and DataTAC as well as complex voice and data networks such as GSM/GPRS, CDMA, EDGE, UMTS and CDMA2000 networks.

It is known to provide multiple user-selectable profiles (e.g. loud, discreet, quiet, etc.) for notifying or alerting the user to service activity (e.g. incoming call or e-mail message, calendar event, daily alarm, etc.). On device start-up, each application (e.g. calendar, e-mail, phone, etc.) registers with a profile system using a unique ID, to facilitate programming of an individual profile setting for each application.

Some users may have multiple services that they wish to access through the device. For example, some users may wish to access multiple e-mail accounts, and other types of data services, all or some of which may be provided by different service providers.

Although it is known to select a profile for application to a particular service, for example from US-A-2005/0079863, it would be desirable to apply a unique profile setting to each of multiple services (e.g. a unique profile setting for each of a user's multiple e-mail accounts)._{.}

### GENERAL

According to one aspect there is preferably provided a method in an electronic device; said method for configuring unique profile settings for multiple services associated with an application, said method comprising: providing a profile system having multiple programmable profile settings; receiving service records for said multiple services; registering said multiple services with said profile system using a unique ID for each of said service records; and assigning said multiple programmable profile settings to respective ones of said multiple services.

By providing multiple unique profile settings for different services, the user may set a different ring tone, volume, etc., for each service (e.g. separate e-mail accounts) to which the user has subscribed.

According to an additional aspect, the ID associated with each service for registration with the profile system may also identify a default root profile setting that permits later registration with the profile system in circumstances where no service record for the service has yet been downloaded to the device. This facilitates migration of profile settings that have been programmed before Over-the-Air (OTA) device synchronization following a software upgrade, or after a system restore operation.

In another aspect the invention provides an electronic device comprising: a profile system for configuring unique profile settings for multiple services associated with an application, said profile system having multiple programmable profile settings; means for receiving service records for said multiple services; means for registering said multiple services with said profile system using a unique ID for each of said service records; and means for assigning said multiple programmable profile settings to respective ones of said multiple services.

### BRIEF DESCRIPTION OF THE DRAWINGS

Figure 1 is a schematic representation of a electronic device with a graphical user interface for programming profile settings for different applications;

Figure 2 is a block diagram of certain internal components within the electronic device of Figure 1;

Figure 3 is a block diagram of a communication system with which the electronic device of Figures 1 and 2 communicates; .

Figure 4 is a block diagram of a profile system forming part of the electronic device of Figures 1 and 2, according to an exemplary embodiment;

Figure 5 is a schematic representation of the electronic device with a graphical user interface for programming profile settings for different services, according to an exemplary embodiment;

Figure 6 is a flowchart showing a method for configuring unique profile settings for multiple services according to an exemplary embodiment; and

Figure 7 is a flowchart showing a method for configuring unique profile settings for multiple services according to a further embodiment.

### DESCRIPTION OF PREFERRED EMBODIMENTS

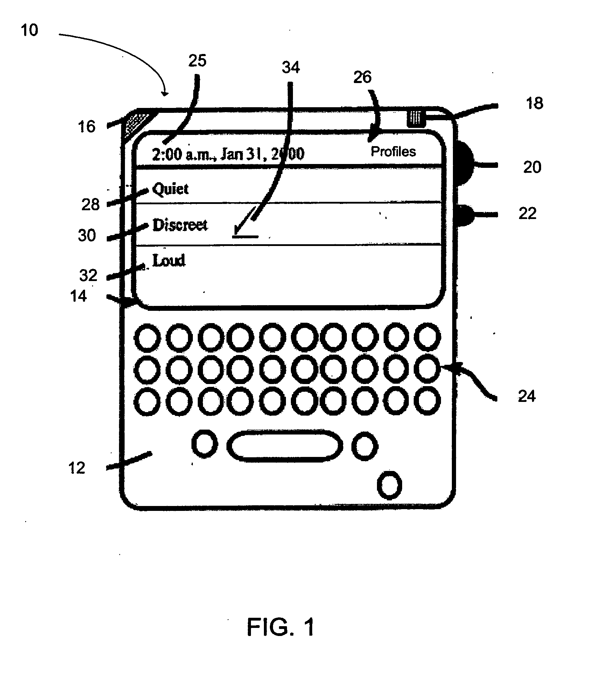

Reference is first made to Figure 1, showing an electronic device 100 based on the computing environment and functionality of a wireless personal digital assistant. It is, however, to be understood that electronic device 10 can include the construction and functionality of other electronic devices, such as desktop computers, cell phones, smart telephones, and laptops with wireless 802.11.or bluebook chip sets and the like. In one embodiment, electronic device 10 includes a housing 12, which frames an LCD display 14, as well as a speaker 16, an LED indicator 18, a trackwheel 20, an exit key 22 and a key pad 24. Trackwheel 20 and exit key 22 can be inwardly depressed to provide additional user-input. In the illustrated embodiment, LCD display 14 depicts a system clock 25 and additional information, such as generated by a "Profiles" application 26, as discussed in greater detail below

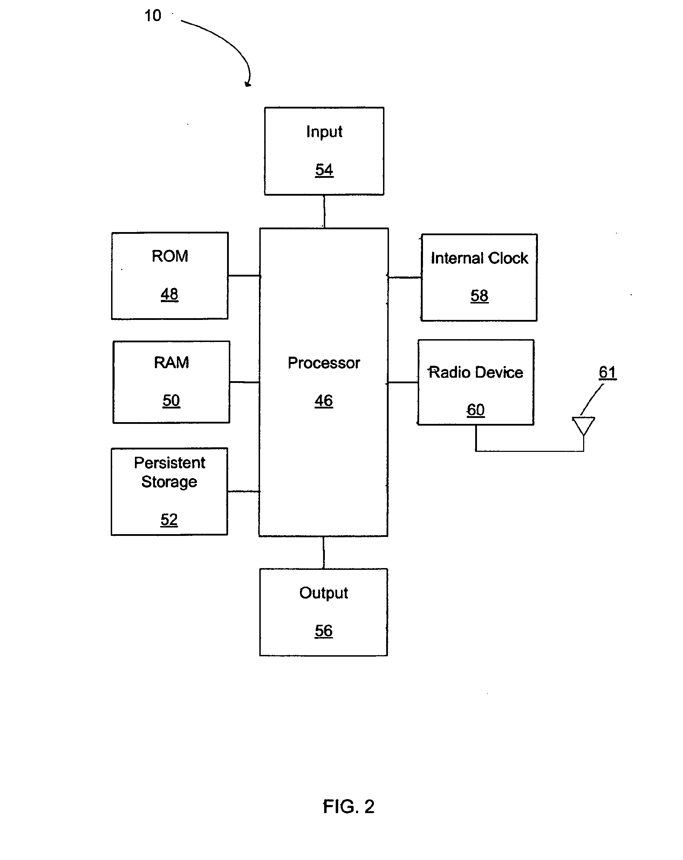

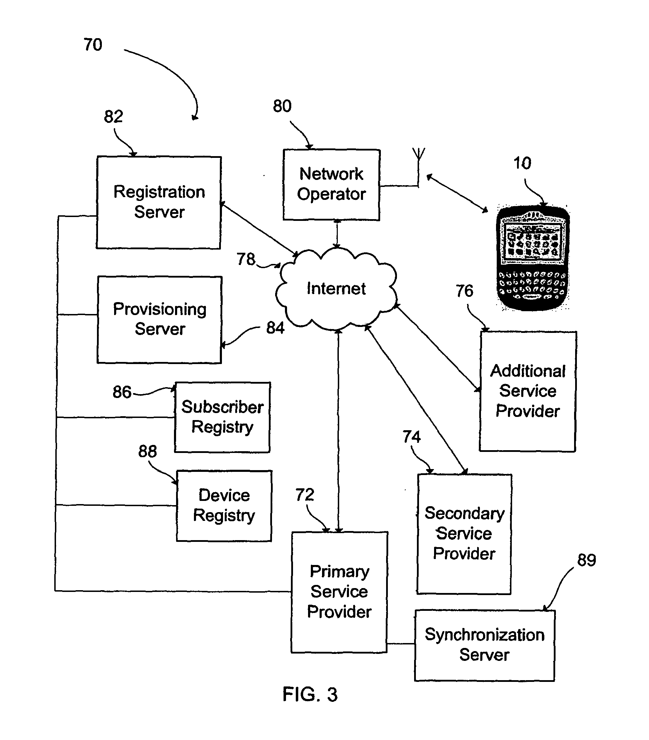

Turning briefly to Figure 2, certain internal components within the electronic device 10 are illustrated by way of a block diagram. The electronic device 10 is based on a microcomputer that includes a processor 46 connected to a read-only-memory (ROM) 48 that contains a plurality of applications executable by the processor 46 to enable the electronic device 10 to provide certain services (e.g. calendar, e-mail, phone, etc.). The processor 46 is also connected to a random access memory (RAM) 50 and a persistent storage device 52, which is responsible for various non-volatile storage functions of the electronic device 10. The processor 46 receives input from input devices 54 such as key pad 24, trackwheel 20 and exit key 22 (Figure 1). The processor 46 outputs to output devices 56 such as LCD display 14, LED indicator 18 and speaker 16 (Figure 1) The processor 46 is also connected to an internal clock 58 and a radio device 60 which, in turn, is connected to an antenna 61. Together, the radio device 60 and the antenna 61 are used to communicate over a wireless network. As discussed in greater detail below with reference to Figure 3, the electronic device 10 is operable to receive and transmit communication signals containing data that is communicated to and from a communication system via the radio device 60 and the antenna 61.

Returning to FIG. 1, LCD display 14 of electronic device 10 may be used to display different notification profiles using "Profiles" application 26. This allows the user to program customized notification or alerting profiles. A plurality of notification profiles is shown: Quiet 28, Discreet 30, and Loud 32. Each of these profiles can be customized by the manufacturer or by the user according to user preference, and can also be deleted or supplemented with additional profiles as desired. The following Table shows how each profile can be customized:

| An Example of Customizing Methods of Notification | | | |
|---|---|---|---|
| Mode of Notification | Application | Notification Behaviour | |
| Quiet | Message Reader | Type: | Inaudible |
| | | Tune | None |
| | | Volume: | Mute |
| | Daily Alarm | Type: | Audible |
| | | Tune: | Ring 2 |
| | | Volume: | Low |
| Discret | Message Reader | Type: | Audible & Inaudible |
| | | Tune: | Ring 3 |
| | | Volume: | Medium |
| | Daily Alarm: | Type: | Audible |
| | | Tune: | Ring 1 |
| | | Volume: | Low |
| Loud | Message Reader | Type: | Audible |
| | | Tune: | Ring 5 |
| | | Volume: | High |
| | Daily Alarm | Type: | Audible |
| | | Tune: | Ring 6 |
| | | Volume: | High |

Checkmark 34, located beside the profile "Discreet", in Figure 1, indicates that the default mode of notification for the present example is Discreet 30. Trackwheel 20 can be used to scroll through the different profiles and to select a particular profile for each application (e.g. message reader (email), daily alarm, calendar, etc.).

As illustrated in the foregoing Table, each profile can give rise to a different notification output for various applications on device 10, and notification behavior can be customized according to a variety of criteria, such as "type", "tune" and "volume". "Type" can be either audible or inaudible. Audible means a sound emanating from speaker 16 and inaudible means a light flashing from LED indicator 18. "Tune" can be any tune chosen by the manufacturer or the user and programmed into device 10. This is the tune that would be played by speaker 16 when "type" is set to audible. "Volume" determines the volume of the tune and in the present embodiment can be low, medium or high.

It will be apparent to those skilled in the art that the foregoing Table is just one example of the way in which notifications can be customized. Furthermore, the specific types, tunes and volumes outlined in this Table are not particularly limited. Also the list of specific applications associated with each mode is not particularly limited and can match the complete set of applications on device 10.

Turning now to Figure 3, a communication system is shown over which the electronic device 10 communicates. More particularly, a system 70 is shown for provisioning a plurality of services to the electronic device 10. Thus, for example, a first e-mail account (e.g. Rogers™ e-mail) may be provided by a primary service provider 72, and a second e-mail account (e.g. Yahoo!™ email account) may be provided by a secondary service provider 74. Additional service providers, such as service provider 76, may provide further services. System 70 and service providers 72, 74, 76, etc., communicate over Internet 78, in a well-known manner. Electronic device 10 also communicates over Internet 78 via wireless services provided by a network operator 80.

The system 70 includes a registration server 82, a provisioning server 84, a subscriber registry 86 and a device registry 88. The system 70 is shown operating under control of the primary service provider 72, although the system 70 may operate under control of the secondary service provider 74, the additional service provider 76, or independently of any service provider.

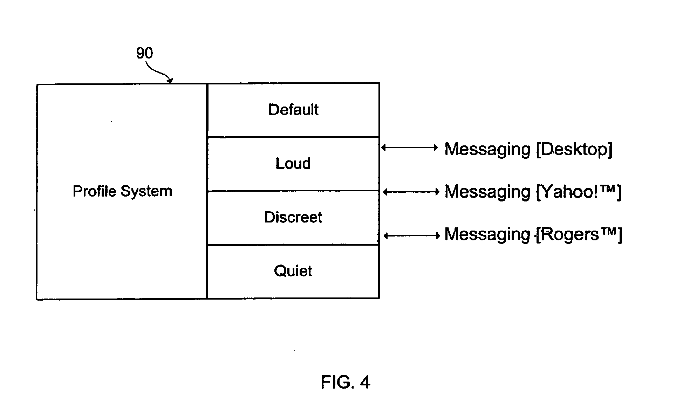

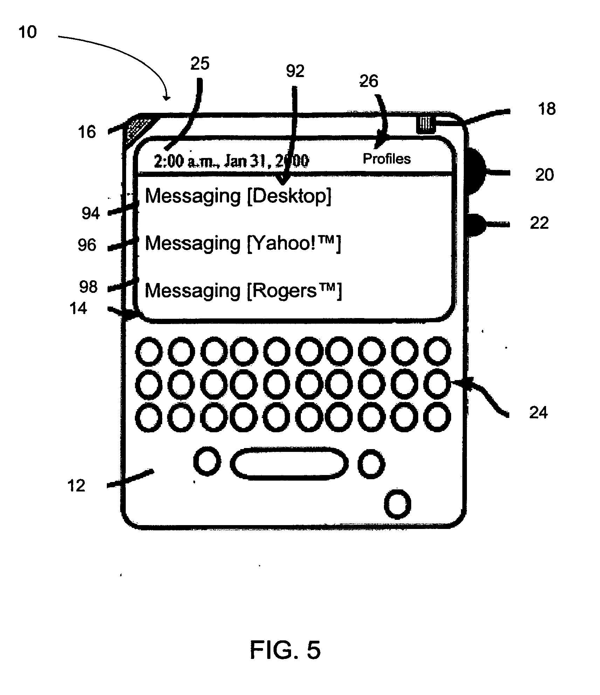

The system 70 may also include a synchronization server 89 for performing data synchronization with the electronic device, as discussed in greater detail below with reference to Figures 4 and 5.

It is conventional for the primary service provider 72 to store an IP address of the registration server 82 within electronic device 10, at the time the device is delivered to the user. Upon initially activating the electronic device 10, the device detects the presence of the wireless network controlled by network operator 80 and uses the stored address of the registration server 82 to send a registration request to the registration server. The registration request includes an identification code for the device 10, the identity of the user, and the identity of the network operator 80.

Upon receipt of the registration request, server 82 attempts to authenticate the request and, if successful, extracts the information in the request message and transmits it to the provisioning server 84. Provisioning server 84 determines whether the user is permitted to provision the associated service by checking the status of the user in subscriber registry 86. Similarly, provisioning server 84 checks the status of the device in device registry 88. If provisioning server 84 is unable to approve the registration request based on the status of the user or the device as maintained in the subscriber registry 86 and/or the device registry 88 then provisioning server 84 typically either disallows or delays the registration request while the subscriber's status is checked in real-time with the network operator 80.

lf the provisioning server 84 is able to approve the registration request then, the provisioning server 84 transmits (or "pushes") a service book (or multiple service books) to the device 10 that contains data and instructions to enable the device 10 to provision the associated service provided by service provider 72. The service book is configured to become active upon receipt at the device 10 to permit the user to enter a desired user ID and a desired password for the associated service.

The device 10 then transmits the user ID and password specified by the user for the associated service to provisioning server 84. Communication between the electronic device and the provisioning server 84 may be protected using encryption or other techniques, such as transport layer security (TLS). The provisioning server 84 determines if an account for the associated service may be created using the user ID and password specified by the user. If the account may be created, then provisioning server 84 creates the associated service account for device 10 in the associated server provider system 72 and downloads a corresponding service book to the electronic device 10. The corresponding service book contains service records such as a Compressed Multipurpose Internet Mail Extensions (CMIME) service record, for example.

If the user wishes to associate additional services, provisioning server 84 permits the user to specify details relating to each additional service. For example, the user may enter the e-mail address, username and password for the additional service (which may be provided by secondary service provider 74 or additional service provider 76). This information is transmitted to the provisioning server 84 which then attempts to contact the additional service provider system (e.g. secondary service provider 74 or additional service provider 76) to associate the additional service with the primary service provided by the primary service provider 72.

If the provisioning server 84 is able to configure the additional service to operate with the primary service, it pushes a new service book to the electronic device 10 that is similar to the initial service book, except that it is preferably not configured to become active automatically when received at the device 10. The new service book may be executed on electronic device 10 at the request of the user and may be used to associate additional services with the primary service. As indicated above, upon creation of the additional service account for device 10 in the associated server provider system 72, the provisioning server 84 downloads a further service book to the electronic device 10.

According to an exemplary embodiment, as shown in Figure 4, a profile system 90 is provided having multiple programmable profile settings (e.g. Loud, Discreet, Quiet, and, although not shown, optionally also vibrate, LED flash, etc.), and a default profile setting that is initially assigned to each application (e.g. calendar, messaging, tasks, alarm, etc.). In response to receipt of service records for multiple services associated with an application (e.g. multiple e-mail accounts associated with the messaging application), the multiple services register with the profile system using a unique ID for each service record. Thus, for the exemplary embodiment of Figure 4, each of the multiple messaging services (i.e. Messaging [Desktop], Messaging [Yahoo!™], Messaging [Rogers™], etc.) registers with the profile system 90. As part of the registration process, each of the multiple services transmits data to the profile system 90 for identifying the default profile setting for the associated application (i.e. Messaging).

In response, profile system 90 initially assigns the default profile setting to each of the multiple services pending receipt of profile setting data whereupon individual programmable profile settings are assigned to respective ones of the multiple services.

As shown in Figure 5, a user interface 92 is provided for entering profile setting data. By highlighting and then clicking any of the services (Messaging [Desktop] 94, Messaging [Yahoo!™] 96, Messaging [Rogers™] 98, etc.) using trackwheel 20, the list of notification profiles Quiet 28, Discreet 30, and Loud 32 are displayed, as shown in Figure 1. The user may then enter profile setting data by selecting one of the profiles (e.g. "Discreet) using the trackwheel 20.

In some cases, such as during a system restore or after a software version upgrade, the user's programmed profiles will be reset. However, the profile setting data for the programmed profiles will have been stored on synchronization server 89 as a result of a previous routine data synchronization between the electronic device 10 and the synchronization server 89. Hence, when the device 10 and server 89 perform the next data synchronization the profile setting data may be downloaded to the electronic device 10 before the user's multiple services (e.g. e-mail accounts) have been provisioned. Consequently, the profile system 90 has no services against which to apply the profile setting data.

In this case, the profile setting data is stored in the profile system 90 but marked as hidden files. If no service records for the services in connection with which hidden profile settings have been stored are received by the device 10 within a predetermined period of time (e.g. 7 days), the hidden files are discarded during a subsequent synchronization process.

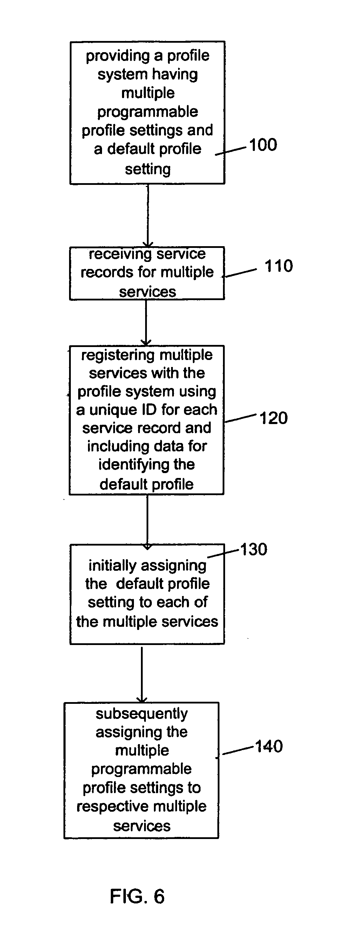

Turning to Figure 6, a flowchart is provided showing a method for configuring unique profile settings for multiple services according to an exemplary embodiment. In step 100, profile system 90 is provided having multiple programmable profile settings and a default profile setting for the application (e.g. messaging). In step 110, service records are received for the multiple services from provisioning server 84. In step 120, the multiple services register with the profile system 90 using a unique ID for each service record and including data for identifying the default profile setting for the application. In step 130, the default profile setting is initially assigned to each of the multiple services. Then, at step 140, the multiple programmable profile settings are subsequently assigned to respective ones of the multiple services.

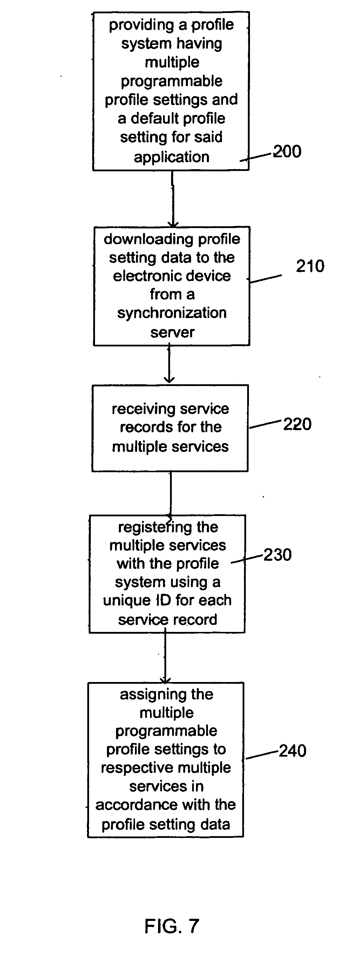

Turning to Figure 7, a flowchart is provided showing a method for configuring unique profile settings for multiple services according to a further embodiment. In step 200, profile system 90 is provided having multiple programmable profile settings. In step 210, profile setting data is downloaded to the electronic device 10 from synchronization server 89. In step 220, service records are received for the multiple services from provisioning server 84. In step 230, the multiple services register with the profile system 90 using a unique ID for each service record. Then, at step 240, the multiple programmable profile settings are assigned to respective ones of the multiple services.

While the embodiment described herein is directed to a particular implementation for configuring unique profile settings for multiple services, it will be understood that the steps described hereinabove are not limited to the order in which they are described. The steps described can be performed in any suitable order as may occur to those skilled in the art.

Many other modifications and variations may occur to those skilled in the art.

## Claims

1. A method in an electronic device; said method for configuring unique profile settings for multiple services associated with an application, said method comprising:
providing a profile system (90) having multiple programmable profile settings;
receiving service records for said multiple services;
registering said multiple services with said profile system (90) using a unique ID for each of said service records; and
assigning said multiple programmable profile settings to respective ones of said multiple services.

2. The method of claim 1, wherein said step of providing comprises providing the profile system (90) having multiple programmable profile settings and a default profile setting for said multiple services; said step of registering comprises registering said multiple services with said profile system (90) using a unique ID for each of said service records and data for identifying the default profile setting for said application; and said method further comprises the step of initially assigning said default profile setting to each of said multiple services prior to subsequently assigning said multiple programmable settings to respective ones of said multiple services.

3. The method of claim 1 or claim 2, wherein said multiple programmable profile settings are assigned to said respective ones of said multiple services via a user interface.

4. The method of any one of the preceding claims, wherein it further comprises downloading profile setting data to said electronic device from a synchronization server.

5. The method of claim 4, wherein said multiple programmable profile settings are assigned to said respective ones of said multiple services as a result of said downloading said profile setting data during synchronization between said electronic device and a synchronization server.

6. The method of claim 4 or claim 5, wherein said profile setting data is stored in said electronic device in hidden files pending receipt of said service records.

7. The method of claim 6, wherein said profile setting data is discarded in the event said service records have not been received within a predetermined time period.

8. An electronic device comprising:
a profile system (90) for configuring unique profile settings for multiple services associated with an application, said profile system (90) having multiple programmable profile settings;
means for receiving service records for said multiple services;
means for registering said multiple services with said profile system (90) using a unique ID for each of said service records; and
means for assigning said multiple programmable profile settings to respective ones of said multiple services.

9. The electronic device of claim 8, wherein the profile system (90) has multiple programmable profile settings and a default profile setting for said multiple services; said means for registering is arranged to register said multiple services with said profile system (90) using a unique ID for each of said service records and data for identifying the default profile setting for said application; and said apparatus further comprises means for initially assigning said default profile setting to each of said multiple services prior to said means for assigning subsequently assigning said multiple programmable settings to respective ones of said multiple services.

10. The electronic device of claim 8 or claim 9, further comprising a user interface for assigning said multiple programmable profile settings to said respective ones of said multiple services.

11. The electronic device of any one of claims 8 to 10, further comprising a synchronization server for downloading profile setting data to said electronic device whereupon said multiple programmable profile settings are assigned to said respective ones of said multiple services.

12. The electronic device of claim 11, further comprising memory within said electronic device for storing said profile setting data as hidden files pending receipt of said service records.

13. The electronic device of claim 12, further comprising means for discarding said profile setting data in the event said service records have not been received within a predetermined time period.

14. A computer-readable medium having computer readable code embodied therein for causing a computing device to perform the method of any one of claims 1 to 7.

## Patentansprüche

1. Verfahren in einer elektronischen Vorrichtung; wobei das Verfahren zum Konfigurieren eindeutiger Profileinstellungen für Mehrfachdienste, die mit einer Anwendung verbunden sind, dient und folgendes umfasst:
Bereitstellen eines Profilsystems (90) mit mehrfachen programmierbaren Profileinstellungen;
Empfangen von Dienstaufzeichnungen für die Mehrfachdienste;
Eintragen der Mehrfachdienste mit dem Profilsystem (90) unter Verwendung einer eindeutigen Kennung für jede der Dienstaufzeichnungen; und
Zuordnen der mehrfachen programmierbaren Profileinstellungen zu betreffenden der Mehrfachdienste.

2. Verfahren nach Anspruch 1, wobei der Schritt des Bereitstellens das Vorsehen des Profilsystems (90) mit mehrfachen programmierbaren Profileinstellungen und einer Standardprofileinstellung für die Mehrfachdienste umfasst; der Schritt des Eintragens das Eintragen der Mehrfachdienste mit dem Profilsystem (90) unter Verwendung einer eindeutigen Kennung für jede der Dienstaufzeichnungen und Daten zum Identifizieren der Standardprofileinstellung für die Anwendung umfasst; und das Verfahren weiterhin den Schritt des anfänglichen Zuordnens der Standardprofileinstellung zu jedem der Mehrfachdienste vor dem nachfolgenden Zuordnen der mehrfachen programmierbaren Einstellungen zu betreffenden der Mehrfachdienste umfasst.

3. Verfahren nach Anspruch 1 oder 2, wobei die mehrfachen programmierbaren Profileinstellungen den betreffenden der Mehrfachdienste über eine Benutzerschnittstelle zugeordnet werden.

4. Verfahren nach irgendeinem der vorhergehenden Ansprüche, wobei es weiterhin das Herunterladen von Profileinstellungsdaten von einem Synchronisationsserver auf die elektronische Vorrichtung umfasst.

5. Verfahren nach Anspruch 4, wobei die mehrfachen programmierbaren Profileinstellungen den betreffenden der Mehrfachdienste als Ergebnis des Herunterladens der Profileinstellungsdaten während der Synchronisation zwischen der elektronischen Vorrichtung und einem Synchronisationsserver zugeordnet werden.

6. Verfahren nach Anspruch 4 oder Anspruch 5, wobei die Profileinstellungsdaten in der elektronischen Vorrichtung in verborgenen Dateien bis zum Empfang der Dienstaufzeichnungen gespeichert werden.

7. Verfahren nach Anspruch 6, wobei die Profileinstellungsdaten in dem Fall, dass die Dienstaufzeichnungen nicht innerhalb eines vorgegebenen Zeitraums erhalten worden sind, verworfen werden.

8. Elektronische Vorrichtung mit:
einem Profilsystem (90) zum Konfigurieren eindeutiger Profileinstellungen für Mehrfachdienste, die mit einer Anwendung verbunden sind, wobei das Profilsystem (90) mehrfache programmierbare Profileinstellungen aufweist; Einrichtungen zum Empfangen von Dienstaufzeichnungen für die Mehrfachdienste;
Einrichtungen zum Eintragen der Mehrfachdienste in dem Profilsystem (90) unter Verwendung einer eindeutigen Kennung für jede der Dienstaufzeichnungen; und
Einrichtungen zum Zuordnen der mehrfachen programmierbaren Profileinstellungen zu betreffenden der Mehrfachdienste.

9. Elektronische Vorrichtung nach Anspruch 8, wobei das Profilsystem (90) mehrfache programmierbare Profileinstellungen und eine Standardprofileinstellung für die Mehrfachdienste aufweist; die Einrichtung zum Eintragen dazu ausgelegt ist, die Mehrfachdienste in dem Profilsystem (90) unter Verwendung einer eindeutigen Kennung für jede der Dienstaufzeichnungen und Daten zum Identifizieren der Standardprofileinstellung für die Anwendung einzutragen; und die Vorrichtung weiterhin Einrichtungen zum anfänglichen Zuordnen der Standardprofileinstellung zu jedem der Mehrfachdienste umfasst, bevor die Einrichtung zum Zuordnen nachfolgend die mehrfachen programmierbaren Einstellungen den betreffenden der Mehrfachdienste zuordnet.

10. Elektronische Vorrichtung nach Anspruch 8 oder Anspruch 9, weiterhin mit einer Benutzerschnittstelle zum Zuordnen der mehrfachen programmierbaren Profileinstellungen zu den betreffenden der Mehrfachdienste.

11. Elektronische Vorrichtung nach irgendeinem der Ansprüche 8 bis 10, weiterhin mit einem Synchronisationsserver zum Herunterladen von Profileinstellungsdaten auf die elektronische Vorrichtung, woraufhin programmierbare Profileinstellungen den betreffenden der Mehrfachdienste zugeordnet werden.

12. Elektronische Vorrichtung nach Anspruch 11, weiterhin mit einem Speicher innerhalb der elektronischen Vorrichtung zum Speichern der Profileinstellungsdaten als verborgene Dateien bis zum Empfang der Dienstaufzeichnungen.

13. Elektronische Vorrichtung nach Anspruch 12, weiterhin mit Einrichtungen zum Verwerfen der Profileinstellungsdaten in dem Fall, dass die Dienstaufzeichnungen nicht innerhalb eines vorgegebenen Zeitraums erhalten worden sind.

14. Computerlesbares Medium mit einem darin eingebetteten computerlesbaren Code, um eine Computereinrichtung zu veranlassen, das Verfahren nach irgendeinem der Ansprüche 1 bis 7 durchzuführen.

## Revendications

1. Procédé dans un dispositif électronique, ledit procédé étant destiné à configurer des paramétrages de profil uniques pour des services multiples associés à une application, ledit procédé comprenant les étapes consistant à :
fournir un système de profils (90) ayant de multiples paramétrages de profil programmables ;
recevoir des enregistrements de service pour lesdits services multiples ;
enregistrer lesdits services multiples dans ledit système de profils (90), en utilisant un identificateur unique pour chacun desdits enregistrements de services ; et
attribuer lesdits multiples paramétrages de profil programmables à des services respectifs parmi lesdits services multiples.

2. Procédé selon la revendication 1, dans lequel ladite étape de fourniture comprend l'étape consistant à fournir le système de profils (90) ayant de multiples paramétrages de profil programmables et un paramétrage de profil par défaut pour lesdits services multiples; ladite étape d'enregistrement comprend l'étape consistant à enregistrer lesdits services multiples dans ledit système de profils (90) en utilisant un identificateur unique pour chacun desdits enregistrements et des données pour identifier le paramétrage de profil par défaut pour ladite application ; et ledit procédé comprend en outre l'étape consistant à attribuer initialement ledit paramétrage de profil par défaut à chacun desdits services multiples avant d'attribuer ensuite lesdits multiples paramétrages programmables à des services respectifs parmi lesdits services multiples.

3. Procédé selon la revendication 1 ou la revendication 2, dans lequel lesdits multiples paramétrages de profil programmables sont attribués auxdits services respectifs parmi lesdits services multiples à l'aide d'une interface utilisateur.

4. Procédé selon l'une quelconque des revendications précédentes, comprenant en outre le téléchargement de données de paramétrages de profil vers ledit dispositif électronique, à partir d'un serveur de synchronisation.

5. Procédé selon la revendication 4, dans lequel lesdits multiples paramétrages de profil programmables sont attribués auxdits services respectifs parmi lesdits services multiples à la suite dudit téléchargement desdites données de paramétrages de profil pendant la synchronisation entre ledit dispositif électronique et un serveur de synchronisation.

6. Procédé selon la revendication 4 ou la revendication 5, dans lequel lesdites données de paramétrages de profil sont stockées dans ledit dispositif électronique dans des fichiers cachés en attendant la réception desdits enregistrements de services.

7. Procédé selon la revendication 6, dans lequel lesdites données de paramétrages de profil sont détruites lorsque lesdits enregistrements de services n'ont pas été reçus au cours d'une période de temps prédéterminée.

8. Dispositif électronique comprenant :
un système de profils (90) destiné à configurer des paramétrages de profil uniques pour des services multiples associés à une application, ledit système de profils (90) ayant de multiples paramétrages de profil programmables ;
un moyen destiné à recevoir des enregistrements de service pour lesdits services multiples ;
un moyen destiné à enregistrer lesdits services multiples dans ledit système de profils (90), en utilisant un identificateur unique pour chacun desdits enregistrements de services ; et
un moyen destiné à attribuer lesdits multiples paramétrages de profil programmables à des services respectifs parmi lesdits services multiples.

9. Dispositif électronique selon la revendication 8, dans lequel le système de profils (90) possède de multiples paramétrages de profil programmables et un paramétrage de profil par défaut pour lesdits services multiples ; ledit moyen d'enregistrement est conçu pour enregistrer lesdits services multiples dans ledit système de profils (90) en utilisant un identificateur unique pour chacun desdits enregistrements et des données pour identifier le paramétrage de profil par défaut pour ladite application ; et ledit appareil comprend en outre un moyen destiné à attribuer initialement ledit paramétrage de profil par défaut à chacun desdits services multiples avant que ledit moyen d'attribution n'attribue ensuite lesdits multiples paramétrages programmables à des services respectifs parmi lesdits services multiples.

10. Dispositif électronique selon la revendication 8 ou la revendication 9, comprenant en outre une interface utilisateur destinée à attribuer lesdits multiples paramétrages de profil programmables auxdits services respectifs parmi lesdits services multiples.

11. Dispositif électronique selon l'une quelconque des revendications 8 à 10, comprenant en outre un serveur de synchronisation destiné à télécharger des données de paramétrages de profil vers ledit dispositif électronique, après quoi lesdits multiples paramétrages de profil programmables sont attribués auxdits services respectifs parmi lesdits services multiples.

12. Dispositif électronique selon la revendication 11, comprenant en outre de la mémoire dans ledit dispositif électronique afin de stocker lesdites données de paramétrages de profil sous la forme de fichiers cachés en attendant la réception desdits enregistrements de services.

13. Dispositif électronique selon la revendication 12, comprenant en outre un moyen destiné à détruire lesdites données de paramétrages de profil lorsque lesdits enregistrements de services n'ont pas été reçus au cours d'une période de temps prédéterminée.

14. Support lisible par ordinateur portant du code lisible par ordinateur qui y est matérialisé afin de commander à un dispositif informatique d'exécuter le procédé selon l'une quelconque des revendications 1 à 7.
